(19) **Europäisches Patentamt / European Patent Office / Office européen des brevets**

(11) **EP 2 659 616 B1**

(12) **FASCICULE DE BREVET EUROPEEN**

(45) Date de publication et mention
de la délivrance du brevet:
**24.09.2014 Bulletin 2014/39**

(21) Numéro de dépôt: **11815514.2**

(22) Date de dépôt: **22.12.2011**

(51) Int Cl.:
*H04L 9/32* (2006.01)     *H04W 12/06* (2009.01)
*H04W 88/02* (2009.01)

(86) Numéro de dépôt international:
**PCT/FR2011/053143**

(87) Numéro de publication internationale:
**WO 2012/089967 (05.07.2012 Gazette 2012/27)**

(54) **PROCÉDÉ D'AUTHENTIFICATION D'UNE PREMIÈRE ET D'UNE DEUXIÈME ENTITÉS AUPRÈS D'UNE TROISIÈME ENTITÉ**

VERFAHREN ZUR AUTHENTIFIZIERUNG EINER ERSTEN UND EINER ZWEITEN EINHEIT GEGENÜBER EINER DRITTEN EINHEIT

METHOD OF AUTHENTICATION OF A FIRST AND A SECOND ENTITY TOWARDS A THIRD ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.12.2010 FR 1061367**

(43) Date de publication de la demande:
**06.11.2013 Bulletin 2013/45**

(73) Titulaire: **Orange**
**75015 Paris (FR)**

(72) Inventeurs:
• **MICHAU, Benoît**
**F-75018 Paris (FR)**
• **ROBSHAW, Matthew**
**F-95220 Herblay (FR)**

(56) Documents cités:
**US-A- 5 790 667     US-A1- 2003 233 546**
**US-A1- 2008 208 753     US-B1- 7 096 494**

• 3GPP: "3rd Generation Partnership Project; Technical Specification Group TSG SA; Feasibility Study on LTE Relay Node Security Release 10", 3GPP DRAFT; S3-101404_ATT_CHANGE_BARS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Sorrento; 20101115, 3 décembre 2010 (2010-12-03), XP050526257, cité dans la demande

## Description

L'invention porte sur un procédé d'authentification d'au moins deux entités distinctes auprès d'une troisième entité.

Plus précisément l'invention permet d'authentifier plusieurs entités qui communiquent auprès d'une entité centrale à travers un canal de communication réduit en termes de bande passante et de nombre de messages échangés.

L'invention trouve une application particulièrement intéressante dans le domaine des télécommunications mobiles. Notamment dans le cas où un opérateur souhaite authentifier un dispositif de type carte « SIM », ou carte « USIM » (de l'anglais « (Universal) Subscriber Identity Module »), ainsi qu'un terminal qui héberge cette carte. Une telle authentification permet de s'assurer que la carte et le terminal sont associés et ne sont utilisés qu'ensemble. Ce cas de figure est d'autant plus intéressant que de plus en plus d'équipements sont développés pour utiliser le réseau mobile sans présence d'un usager physique veillant à la sécurité de cet équipement. C'est le cas par exemple d'équipements réseau tels que des relais « LTE » (de l'anglais « Long term Evolution ») destinés à étendre le réseau radio tout en ayant un fonctionnement similaire à un terminal mobile, ou d'équipements « M2M » (pour « Machine To Machine ») utilisés par exemple pour des applications de télémaintenance ou de téléalarme.

Par exemple, une application M2M installée sur un équipement M2M utilise un réseau mobile d'opérateur pour permettre à un serveur central d'échanger des informations à distance avec cet équipement, pour relever des informations stockées sur cet équipement ou en modifier l'état sans intervention humaine et surtout, sans surveillance humaine continue de l'équipement M2M. Pour mettre en oeuvre ces échanges d'informations à travers le réseau mobile, l'équipement est doté d'une carte de type carte USIM. Les équipements M2M, au même titre qu'un terminal mobile d'abonné, sont soumis à une authentification du réseau. Plus précisément, il y a authentification de la carte USIM par le réseau selon des algorithmes d'authentification connus. Cependant, dans les procédures d'authentification réseau actuelles, l'équipement mobile associé à la carte USIM n'est pas authentifié, ni par le réseau, ni par la carte USIM. Il ne peut donc être considéré comme un équipement de confiance par l'infrastructure de réseau mobile.

Des propositions ont été faites pour remédier à ce problème. Par exemple, le document 3GPP http://www.3gpp.org/ftp/tsg sa/WG3 Security/TSGS3 61 Sorrento/DOcs/S3-101404.zip propose un schéma d'authentification d'une carte USIM en association avec un terminal mobile dans lequel la carte USIM est insérée. Selon ce schéma, le réseau et la carte USIM partagent de manière classique une clé d'authentification K et le réseau et le terminal partagent une clé symétrique $K_{terminal}$. L'authentification se déroule alors selon les étapes suivantes :

- le réseau envoie de manière classique un challenge RAND à la carte USIM,
- la carte USIM calcule une réponse en appliquant un algorithme F2 d'authentification connu au challenge RAND paramétré par la clé K ; elle transmet la réponse au terminal,
- le terminal calcule une signature de cette réponse au moyen de la clé symétrique propre au terminal $K_{terminal}$ pour produire une nouvelle réponse au challenge RAND,
- la nouvelle réponse est envoyée au réseau,
- le réseau peut alors authentifier le terminal et la carte USIM en vérifiant la signature de la réponse reçue, et la réponse en tant que telle.

Cependant, cette solution ne permet pas, lors d'un échec de l'authentification par le réseau, d'identifier si l'erreur d'authentification provient de la carte USIM, du terminal, ou des deux.

L'invention vient améliorer la situation en proposant un procédé d'authentification d'une première entité et d'une deuxième entité par une troisième entité, lesdites première et troisième entités partageant une première clé secrète, lesdites deuxième et troisième entités partageant une deuxième clé secrète, le procédé comprenant des étapes :

- d'envoi par la troisième entité à la première entité d'un challenge,
- de calcul par la première entité au moyen de la première clé secrète d'une valeur d'authentification fonction du challenge reçu,
- d'envoi par la première entité à la deuxième entité de la valeur d'authentification calculée,
- de calcul par la deuxième entité au moyen d'un algorithme de chiffrement paramétré par la deuxième clé secrète d'une réponse d'authentification, fonction d'un jeton connu de la troisième entité et de la deuxième entité et de la valeur d'authentification reçue de la première entité,
- d'envoi par la deuxième entité à la troisième entité de la réponse d'authentification,
- de calcul par la troisième entité au moyen de la première et de la deuxième clés secrètes d'une réponse d'authentification attendue, fonction du jeton et du challenge,
- de comparaison de la réponse d'authentification reçue à la réponse d'authentification attendue calculée.

Ainsi, le procédé selon l'invention permet d'authentifier deux entités différentes qui communiquent au cours d'une même authentification. Les deux entités authentifiées sont ainsi associées dans le sens où leur authentification est faite conjointement par la troisième entité.

Ainsi, cette authentification permet de s'assurer que les entités authentifiées fonctionnement ensemble. Par exemple, dans le cas d'une authentification de deux entités dans un réseau mobile où la première entité est une carte SIM, ou carte USIM, et la deuxième entité un terminal dans lequel la carte (U)SIM est insérée, l'authentification permet de s'assurer que la carte (U)SIM est bien insérée dans le terminal mobile et ne fonctionne qu'avec le terminal. Cet aspect est intéressant en termes de sécurité dans le cas d'équipements M2M ou de relais LTE qui restent sans surveillance humaine.

Par ailleurs, grâce au procédé de l'invention, il est possible de réutiliser des canaux et interfaces de communication au départ définis pour l'authentification d'une seule entité. Ainsi, il n'est pas nécessaire de modifier des interfaces et de définir de nouveaux messages entre la troisième entité en charge de l'authentification et les deux entités authentifiées. Cet aspect est intéressant par exemple dans le cas d'une authentification de deux entités dans un réseau mobile. En effet, faire évoluer une interface du réseau peut être un travail de longue haleine. D'une manière générale, le procédé minimise les messages échangés entre la troisième entité en charge de l'authentification et les deux entités à authentifier, puisque le nombre de messages échangés entre la troisième entité et les deux entités est identique au nombre de messages échangés lors de l'authentification d'une seule entité.

Par ailleurs, grâce à l'invention, il est possible lors de l'échec de l'authentification de l'une des deux entités d'identifier laquelle des deux a échoué. Cet aspect est rendu possible d'une part par l'utilisation d'un algorithme de chiffrement lors de l'authentification, et d'autre part, par le partage de clés secrètes respectives entre une entité à authentifier et la troisième entité, et d'un jeton connu des deuxième et troisième entités.

L'invention concerne aussi un procédé pour authentifier une première et une deuxième entité par une troisième entité, lesdites première et troisième entités partageant une première clé secrète, lesdites deuxième et troisième entités partageant une deuxième clé secrète, le procédé comprenant des étapes :

- d'envoi à la première entité d'un challenge,
- de calcul au moyen de la première et de la deuxième clé secrète d'une réponse d'authentification attendue, fonction d'un jeton connu de la troisième entité et de la deuxième entité et du challenge,
- de réception en provenance de la deuxième entité d'une réponse d'authentification audit challenge,
- de comparaison de la réponse d'authentification reçue à la réponse d'authentification calculée.

L'invention concerne également un procédé d'authentification d'un groupe constitué d'au moins deux entités auprès d'une troisième entité, la troisième entité et une première entité du groupe partageant une première clé secrète, la troisième entité et une deuxième entité du groupe partageant une deuxième clé secrète, ledit procédé comprenant les étapes :

- de réception en provenance de la troisième entité d'un challenge,
- de calcul par la première entité du groupe au moyen de la première clé secrète d'une valeur d'authentification fonction du challenge reçu,
- d'envoi par la première entité à la deuxième entité du groupe de la valeur d'authentification calculée,
- de calcul par la deuxième entité du groupe au moyen d'un algorithme de chiffrement paramétré par la deuxième clé secrète d'une réponse d'authentification, fonction d'un jeton connu de la troisième entité et de la deuxième entité et de la valeur d'authentification reçue de la première entité,
- d'envoi par la deuxième entité du groupe à la troisième entité de la réponse d'authentification calculée.

Dans un exemple de réalisation, si la réponse d'authentification reçue n'est pas égale à la réponse calculée, le procédé comprend également les étapes suivantes, mises en oeuvre par la troisième entité :

- un déchiffrement de la réponse d'authentification reçue au moyen de la deuxième clé secrète,
- une vérification que la réponse déchiffrée comprend le jeton.

Si la vérification est positive, le procédé comprend également un calcul d'une valeur attendue à partir du challenge et de la première clé secrète, et une vérification que la réponse déchiffrée comprend la valeur attendue.

Ainsi, le procédé permet, lors de l'échec de l'authentification d'identifier précisément l'entité qui a échoué. Ainsi, il est possible, en cas d'échec de l'authentification d'imputer l'erreur d'authentification à la deuxième entité ou, si la deuxième entité s'est correctement authentifiée, à la première entité.

Dans un exemple de réalisation, le jeton comprend une pluralité d'octets de remplissage.

Dans un autre exemple de réalisation, le jeton comprend une partie du challenge.

Dans ce mode de réalisation de l'invention, la sécurité du procédé d'authentification est accrue puisque le jeton varie d'une authentification à une autre.

L'invention porte également sur un dispositif d'authentification adapté pour authentifier une première et une deuxième entité, ledit dispositif partageant avec la première entité une première clé secrète, et avec la deuxième entité une deuxième clé secrète, ledit dispositif comprenant :

- des moyens d'envoi, agencés pour envoyer un challenge à la première entité,
- des moyens de calcul, agencés pour calculer une réponse d'authentification attendue au moyen de la deuxième clé secrète, fonction d'un jeton connu du dispositif d'authentification et de la deuxième entité et d'une signature du challenge au moyen de la première clé secrète,

- des moyens de réception, agencés pour recevoir en provenance de la deuxième entité une réponse audit challenge,
- des moyens de comparaison, agencés pour comparer la réponse reçue à la réponse d'authentification calculée.

L'invention concerne aussi un ensemble de deux entités comprenant une première et une deuxième entité, ledit ensemble étant adapté pour être authentifié par un dispositif d'authentification selon l'invention, le dispositif d'authentification partageant avec la première entité une première clé secrète et avec la deuxième entité une deuxième clé, ledit ensemble comprenant :

- des moyens de réception, agencés pour recevoir en provenance du dispositif d'authentification un challenge,
- des premiers moyens de calcul, agencés pour que la première entité du groupe calcule au moyen de la première clé secrète une valeur d'authentification fonction du challenge,
- des moyens de transmission, agencés pour que la première entité transmette à la deuxième entité du groupe la valeur d' authentification,
- des deuxièmes moyens de calcul, agencés pour que la deuxième entité calcule, au moyen d'un algorithme de chiffrement paramétré par la deuxième clé secrète, une réponse d'authentification, fonction d'un jeton connu du dispositif d'authentification et de la deuxième entité et de la valeur d'authentification reçue de la première entité de l'ensemble,
- des moyens d'envoi, agencés pour envoyer au dispositif d'authentification la réponse d'authentification calculée.

L'invention concerne aussi un système d'authentification comprenant :

- un dispositif d'authentification selon l'invention, et
- un ensemble de deux entités selon l'invention.

L'invention porte également sur un programme d'ordinateur sur un support de données et chargeable dans la mémoire interne d'un dispositif d'authentification, le programme comprenant des portions de code pour l'exécution des étapes du procédé d'authentification qui sont exécutées par le dispositif lorsque le programme est exécuté sur ledit dispositif.

L'invention concerne aussi un support de données sur lequel est enregistré le programme d'ordinateur selon l'invention.

De nombreux détails et avantages de l'invention seront mieux compris à la lecture de la description d'un mode particulier de réalisation en référence aux schémas annexés donnés à titre non limitatif et dans lesquels :

- la figure 1 décrit les étapes du procédé d'authentification de deux entités auprès d'une troisième entité, selon un premier mode particulier de réalisation de l'invention ;
- la figure 2 représente un exemple particulier d'un dispositif d'authentification apte à mettre en oeuvre le procédé de la figure 1 ;
- la figure 3 représente un exemple particulier d'un groupe de deux entités apte à mettre en oeuvre le procédé de la figure 1.

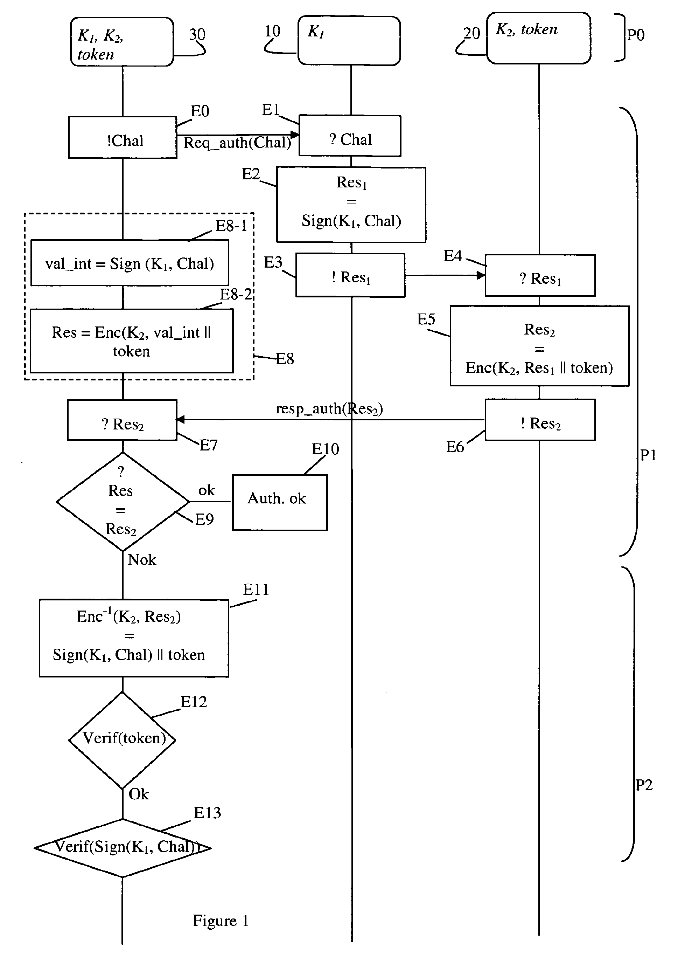

Le procédé d'authentification de deux entités auprès d'une troisième entité va maintenant être décrit en relation avec la figure 1.

Une première entité 10 et une deuxième entité 20 sont aptes à être authentifiées par une troisième entité 30 au cours d'une même authentification. Dans un exemple de réalisation décrit ici, la troisième entité 30 représente un réseau de communication mobile, tel que le réseau « GSM » (pour « Global System for Mobile communications »), ou le réseau « GPRS » (de l'anglais « General Packet Radio Service »). Dans ce cas, la troisième entité 30 est par exemple un centre d'authentification du réseau. La première entité 10 est par exemple une carte d'identité d'abonné de type carte « SIM » ou carte « USIM » (de l'anglais « (Universal) Subscriber Identity Module »), et la deuxième entité 20 est par exemple un terminal mobile dans lequel la carte d'abonné est insérée.

Dans une phase initiale de configuration P0, il est défini un certain nombre de paramètres destinés à être utilisés ensuite lors d'authentifications des première et deuxième entités 10, 20 auprès de la troisième entité 30. La phase de configuration P0 n'est exécutée qu'une fois. Au cours de cette phase de configuration P0, il est partagé une première clé secrète $K_1$ entre la première entité 10 et la troisième entité 30. Il est partagé également une deuxième clé secrète $K_2$ entre la deuxième entité 20 et la troisième entité 30. Par ailleurs, durant cette phase initiale de configuration P0, il est partagé la connaissance d'un jeton dit "token" entre la deuxième entité 20 et la troisième entité 30. Le jeton token est une donnée numérique, qui peut être fixe, ou variable. Le jeton token est une donnée que la deuxième entité 20 et la troisième entité 30 savent obtenir. Par exemple, le jeton correspond à une pluralité d'octets de remplissage '0x00'.

Une fois la phase de configuration P0 exécutée, une phase suivante d'authentification P1 peut avoir lieu. La phase d'authentification P1 est exécutée autant de fois qu'il est nécessaire pour la troisième entité 30 d'authentifier conjointement les première et deuxième entités 10, 20. Les étapes E0 à E10 suivantes décrivent la phase d'authentification P1.

Dans une étape initiale E0 d'envoi d'une requête d'authentification, la troisième entité 30 envoie un message de requête d'authentification req_auth à la première entité 10. Le message de requête d'authentification comprend un challenge Chal. Le challenge Chal est une valeur aléatoire choisie par la troisième entité 30 pour la phase d'authentification P1 courante. Le message de requête, et donc le challenge Chal est reçu par la première entité 10 au cours d'une étape E1 de réception du challenge.

Dans une étape E2 de calcul d'une valeur d'authentification, la première entité 10 calcule une valeur d'authentification $Res_1$, fonction du challenge Chal et de la clé secrète $K_1$ partagée avec la troisième entité 30. Par exemple, la première entité 10 calcule la valeur d'authentification en appliquant un algorithme de signature au challenge Chal, paramétré par la première clé secrète partagée $K_1$. En d'autres termes, $Res_1 = Sign(K_1, Chal)$ ; où Sign est un algorithme de signature connu, par exemple un algorithme « MAC » (de l'anglais « Message Authentication Code »). Dans le cas des réseaux GSM, c'est l'algorithme A3 qui est utilisé. Dans une étape d'envoi E3, la valeur d'authentification $Res_1$ est transmise par la première entité 10 à la deuxième entité 20.

Dans une étape de réception E4, la deuxième entité 20 reçoit la valeur d'authentification $Res_1$ de la première entité 10.

Dans une étape E5 de calcul d'une réponse d'authentification, la deuxième entité 20 calcule une réponse d'authentification $Res_2$. A cette fin, la deuxième entité 20 applique un algorithme de chiffrement Enc, paramétré par la deuxième clé secrète partagée $K_2$, à la valeur d'authentification $Res_1$ reçue de la première entité 10 et concaténée au jeton token. Le jeton token est connu de la troisième entité 30 et de la deuxième entité 20. En d'autres termes, $Res_2 = Enc(K_2, Res_1 \,II\, token)$ ; où Enc est un algorithme de chiffrement connu. Par exemple, l'algorithme de chiffrement Enc est l'algorithme « AES » (pour « Advanced Encryption Standard »), ou l'algorithme « DES » (pour « Data Encryption Standard »). $Res_2$ constitue une réponse au message de requête d'authentification req_auth envoyé par la troisième entité 30 au cours de l'étape initiale E0.

Dans une étape E6 d'envoi de la réponse, la deuxième entité 20 envoie à la troisième entité 30 un message de réponse resp_auth comprenant la réponse d'authentification $Res_2$ calculée au cours de l'étape E5.

Dans une étape de réception E7, la troisième entité 30 reçoit de la deuxième entité 20 le message de réponse resp_auth et donc la réponse d'authentification $Res_2$ calculée.

Dans une étape E8 de calcul d'une réponse attendue, la troisième entité 30 calcule une réponse d'authentification attendue Res. A cette fin, dans une sous-étape E8-1 de l'étape E8, la troisième entité 30 calcule une valeur intermédiaire val_int en utilisant la même fonction de signature que celle appliquée par la première entité 10 au cours de l'étape E2 de calcul d'une valeur d'authentification. En d'autres termes, la troisième entité 30 calcule val_int=Sign($K_1$, Chal) en appliquant l'algorithme de signature Sign, paramétré par la première clé partagée $K_1$, au challenge Chal. Dans une sous étape E8-2 suivante, la troisième entité 30 calcule la réponse d'authentification attendue Res en appliquant le même algorithme de chiffrement que celui utilisé par la deuxième entité 20 au cours de l'étape E5 de calcul d'un résultat d'authentification. En d'autres termes, la troisième entité 30 calcule Res = Enc($K_2$, val_int II token) en appliquant l'algorithme de chiffrement Enc paramétré par la deuxième clé secrète partagée $K_2$ à la valeur intermédiaire val_int obtenue lors de la sous-étape précédente concaténée au jeton token.

On comprend que l'étape E8 de calcul d'un résultat attendu peut être exécutée indépendamment des étapes exécutées par les première et deuxième entités 10, 20. Ainsi, dans un autre exemple de réalisation du procédé, l'étape E8 est exécutée consécutivement à l'étape E0 d'envoi d'un challenge.

Dans une étape de comparaison E9, la troisième entité 30 compare la réponse d'authentification attendue Res, calculée au cours de l'étape E8 avec la réponse d'authentification $Res_2$ reçue de la deuxième entité 20 au cours de l'étape E7.

Si la comparaison est positive (branche ok sur la figure 1), c'est-à-dire si la réponse d'authentification calculée Res est égale à la réponse d'authentification $Res_2$ reçue de la deuxième entité 20, alors l'authentification des première et deuxième entités a réussi. Les deux entités ont donc été correctement authentifiées au cours d'une même phase d'authentification. La troisième entité 30 se trouve alors dans un état E10 d'authentification réussie.

Si la comparaison est négative (branche Nok sur la figure 1) alors, il est procédé à une analyse au cours d'une phase P2 d'analyse afin de déterminer si l'erreur d'authentification provient de la deuxième entité 20, ou, si l'authentification de la deuxième entité 20 a réussi, de la première entité 10.

Ainsi, dans une étape E11 de déchiffrement, la troisième entité 30 procède au déchiffrement de la réponse d'authentification $Res_2$ reçue de la deuxième entité 20 au moyen de la deuxième clé secrète partagée $K_2$. A cette fin, la troisième entité 12 calcule $Enc^{-1}(K_2, Res_2)$, où $Enc^{-1}$ représente l'algorithme de déchiffrement associé à l'algorithme de chiffrement Enc. On remarque que lorsque l'authentification réussit, la réponse d'authentification déchiffrée est égale à la concaténation d'une première valeur correspondant à la signature du challenge Chal au moyen de la première clé secrète partagée $K_1$, à une deuxième valeur correspondant au jeton token. En d'autres termes, en cas d'authentification réussie, l'égalité suivante est vérifiée :

$$\text{Enc}^{-1}(K_2, \text{Res}_2) = \text{Sign}(K_1, \text{Chal}) \parallel \text{token}$$

On remarque que la taille du jeton token étant connue de la troisième entité 30, il est aisé pour la troisième entité 30 de distinguer la première et la deuxième valeur.

Dans une étape E12 de vérification du jeton, il est vérifié si le jeton token connu de la deuxième et de la troisième entités 20, 30 est bien égal à la deuxième valeur comprise dans la réponse d'authentification déchiffrée. Si la vérification est positive, alors la deuxième entité 20 s'est correctement authentifiée. Si la vérification est négative, c'est-à-dire, si le jeton token n'est pas compris dans la réponse d'authentification déchiffrée, alors l'authentification de la deuxième entité 20 a échoué. En effet, dans ce cas, soit la deuxième entité 20 n'a pas utilisé le jeton token convenu lors de la phase de configuration P0, soit elle n'a pas utilisé le bon algorithme de chiffrement Enc, soit elle n'a pas utilisé la deuxième clé secrète partagée $K_2$. Dans ces trois cas, l'authentification de la deuxième entité 20 échoue.

Si la vérification du jeton effectuée au cours de l'étape E12 est positive (branche ok sur la figure), c'est-à-dire si l'authentification de la deuxième entité 20 a réussi, alors, dans une étape suivante E13 de vérification de signature, la troisième entité 30 vérifie la première partie de la réponse d'authentification déchiffrée. Ainsi, la troisième entité 30 calcule une valeur attendue en appliquant l'algorithme de signature Sign au challenge Chal paramétré par la première clé secrète partagée $K_1$. En d'autres termes, la troisième entité 30 calcule $\text{Sign}(K_1, \text{Chal})$. Si la valeur attendue n'est pas égale à la première valeur comprise dans la réponse d'authentification déchiffrée, alors l'authentification de la première entité 10 a échoué.

On remarque que lors de la phase d'analyse P2, il est possible d'imputer une erreur d'authentification à la deuxième entité 20, ou, si l'authentification de la deuxième entité 20 réussit, à la première entité 10.

L'invention est décrite ici dans le cadre d'une authentification par le réseau GSM ou GPRS d'une carte (U)SIM en association avec un terminal mobile dans lequel la carte est insérée. L'invention n'est bien sûr pas limitée à ces réseaux. Ainsi le procédé s'applique également à une authentification dans d'autres réseaux, par exemple un réseau « UMTS » (pour « Universal Mobile Télécommunication System »). Dans cet exemple, l'algorithme de signature mis en oeuvre par la première entité 10 pour calculer la valeur d'authentification est alors l'algorithme « AKA » (de l'anglais « Authentication Key Agreement »).

De même, le procédé n'est pas limité à une authentification dans un réseau mobile d'une carte (U)SIM et d'un terminal. Plus généralement, le procédé s'applique à l'authentification par une entité tierce de deux entités qui communiquent. Ainsi, dans un autre exemple de réalisation, il est procédé à une authentification conjointe par un réseau d'une carte (U)SIM et d'une entité externe au terminal mobile, par exemple un composant « RFID » (pour « Radio Frequency Identification ») apposé sur un produit à acheter. Dans ce cas, le terminal, est adapté pour fonctionner en mode lecteur d'étiquettes RFID. La carte (U)SIM et l'étiquette sont aptes à communiquer via le terminal mobile. Ainsi, l'authentification conjointe de la carte (U)SIM et de l'étiquette RFID peut correspondre à l'obtention sécurisée d'un reçu validant l'achat du produit par l'intermédiaire du terminal. Dans un autre cas d'usage, la deuxième entité est associée à un dispositif externe, par exemple un parcmètre qui intègre un composant « NFC » (de l'anglais « Near Field Communication »). Le terminal joue le rôle de borne NFC et l'authentification conjointe de la carte (U)SIM et du parcmètre en tant que carte NFC par le réseau valide l'achat via le terminal d'un ticket de stationnement.

Il est précisé que lors de la phase de configuration P0 des clés secrètes $K_1$, $K_2$ sont distribuées respectivement à la première et la deuxième entités 10, 20, chacune des clés étant partagée avec la troisième entité 30. Dans l'exemple décrit ici d'un réseau mobile, la première entité est une carte (U)SIM et la deuxième entité est un terminal dans lequel la carte est insérée. La première clé secrète $K_1$, habituellement appelée clé d'authentification est définie et installée dans la carte (U)SIM lors de l'étape de fabrication de la carte. La deuxième clé secrète $K_2$ peut être installée sur le terminal une fois l'équipement mis en circulation. Cette installation peut se faire de manière sécurisée par exemple au moyen d'un système de cryptographie à clés publiques mis en place lors de la fabrication du terminal et destiné à permettre l'installation sécurisée de la deuxième clé secrète partagée $K_2$ depuis la troisième entité , ou depuis une entité de distribution de clés dédiée. Dans ce cas, l'entité de distribution de clés distribue alors la deuxième clé partagée $K_2$ aux deuxième et troisième entités 20, 30.

Le jeton token, connu des deuxième et troisième entités 20, 30 peut être fixe. Par exemple, comme précisé précédemment, il peut consister en des octets de remplissage '0x00' (on parle habituellement de bits de padding). Dans un autre exemple de réalisation, le jeton token peut être variable et correspondre à une partie du challenge Chal envoyé au début de la phase d'authentification. Dans ce cas, la troisième entité 30 et la deuxième entité 20 conviennent lors de la phase de configuration P0 quelle partie du challenge correspond au jeton. Par exemple, ce sont les x premiers bits du challenge qui constituent le jeton, les x derniers, les x premiers bits de poids forts, etc.

La taille du jeton doit être ajustée de telle manière que la sécurité de l'authentification et la taille maximale autorisée du résultat d'authentification transmis par la deuxième entité 20 à la troisième entité 30 soient compatibles. Ainsi, dans un exemple de réalisation correspondant à une authentification dans un réseau mobile de 3eme génération, dans laquelle un résultat d'authentification est habituellement compris entre 32 et 128 bits, il paraît raisonnable d'avoir des jetons de taille comprise entre 32 et 64 bits. Ainsi, la réponse d'authentification a une taille comprise entre 64 et 96 bits. D'autre part, pour des raisons de compatibilité avec l'interface radio offerte par le réseau, la réponse d'authentification $Res_1$ calculée par la première entité 10, ici la carte (U)SIM, peut être tronquée. Par exemple, lorsque la carte (U)SIM est configurée de manière à produire des valeurs d'authentification $Res_1$ de 128 bits, et que l'interface radio avec le réseau est donc adaptée pour transmettre de telles réponses, il apparaît nécessaire de tronquer la valeur d'authentification produite par la carte (U)SIM pour tenir compte du jeton token. En effet, le jeton token est concaténé à la valeur d'authentification $Res_1$ par la deuxième entité 20, ici le terminal. Ainsi, dans cet exemple, la valeur d'authentification $Res_1$ peut être tronquée à 64 ou 96 bits par la première entité 10, ce qui permet d'utiliser un jeton de 64 ou 32 bits. Bien entendu, dans ce cas, lors de l'étape E8 de calcul de réponse attendue, la troisième entité 30, ici le réseau, tronque également la valeur intermédiaire val_int qu'elle calcule.

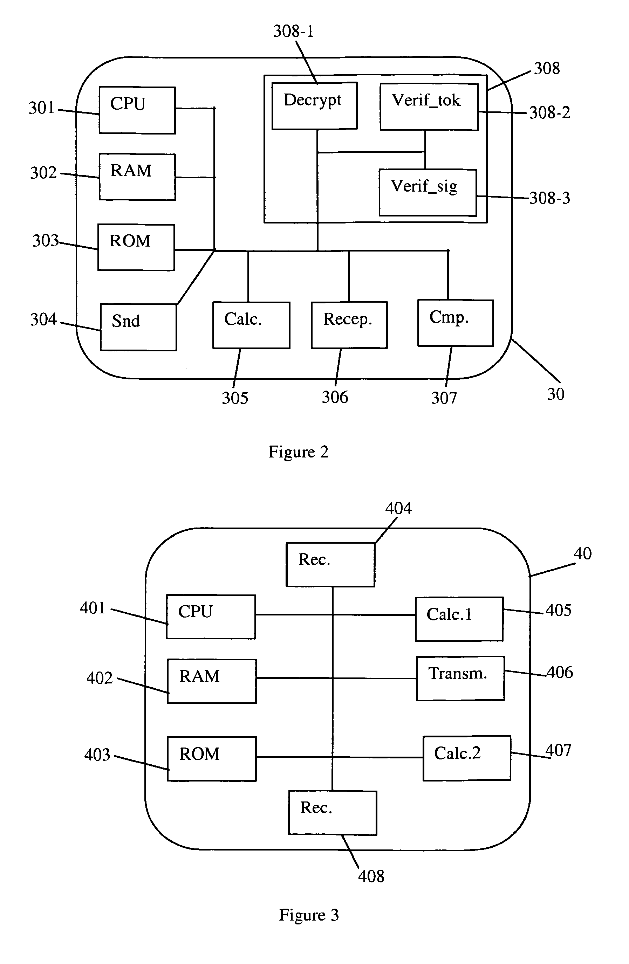

Un exemple particulier de dispositif d'authentification 30 apte à mettre en oeuvre le procédé de la figure 1 va maintenant être décrit en relation avec la figure 2. Le dispositif d'authentification 30 est apte à authentifier un groupe d'au moins deux entités (non représentées sur la figure 2). Le dispositif d'authentification 30 est par exemple un serveur d'authentification d'un réseau mobile dans le cas où le procédé concerne l'authentification par le réseau de deux entités. Dans un autre exemple de réalisation, le dispositif d'authentification est un terminal mobile, apte à authentifier une carte (U)SIM et une entité extérieure au terminal.

Dans tous ces cas, le dispositif d'authentification comprend :

- un processeur 301, ou "CPU" (de l'anglais "Central Processing Unit"), ou unité de traitement. Le processeur 301 est relié à un ensemble de mémoires :
- une mémoire vive 302, ou "RAM" (pour "Random Access Memory), permet d'effectuer des calculs, de charger des instructions et de les exécuter,
- une mémoire morte 303, ou mémoire non volatile, ou "ROM" (pour "Read Only Memory"), adaptée pour mémoriser des données non volatiles, par exemple des algorithmes cryptographiques. Ainsi, la mémoire 303 mémorise un algorithme de signature Sign et un algorithme de chiffrement Enc. Elle mémorise également un jeton token, ou un moyen permettant d'obtenir ce jeton. La mémoire 303 est adaptée également pour stocker dans une zone protégée les clés secrètes que le dispositif d'authentification partage avec les entités à authentifier. Par exemple la mémoire mémorise une première clé secrète $K_1$ partagée avec la première entité à authentifier, et une deuxième clé secrète $K_2$ partagée avec la deuxième entité à authentifier,

Le dispositif d'authentification 30 héberge également une application sous forme d'un programme, apte à mettre en oeuvre les étapes du procédé de l'invention exécutées par le dispositif. A cette fin, le dispositif 30 comprend également :

- des moyens d'envoi 304, agencés pour envoyer à la première entité à authentifier un message de requête d'authentification qui comprend un challenge Chal,
- des moyens de calcul 305, agencés pour calculer une réponse d'authentification attendue Res. Pour ce faire, en fonctionnement, le dispositif 30 applique l'algorithme de chiffrement Enc paramétré par la deuxième clé secrète $K_2$ mémorisée à une donnée obtenue par concaténation d'une première valeur au jeton token. La première valeur est obtenue en appliquant l'algorithme de signature paramétré par la première clé secrète partagée $K_1$ au challenge Chal. Les moyens de calcul 305 sont adaptés pour mettre en oeuvre l'étape E8 de calcul d'une réponse attendue du procédé d'authentification décrit précédemment.
- des moyens de réception 306, agencés pour recevoir en provenance de la deuxième entité un message de réponse à la requête d'authentification au challenge envoyée par les moyens d'envoi 304. Les moyens de réception 306 sont adaptés pour mettre en oeuvre l'étape E7 de réception du procédé d'authentification décrit précédemment,
- des moyens de comparaison 307, agencés pour comparer la réponse d'authentification reçue de la deuxième entité au résultat d'authentification calculé par les moyens de calcul 305. Les moyens de comparaison 307 sont adaptés pour mettre en oeuvre l'étape E9 de comparaison du procédé d'authentification décrit précédemment,
- des moyens d'analyse 308, agencés pour identifier d'où provient une erreur d'authentification détectée par les moyens de comparaison 307. Les moyens d'analyse 308 comprennent :

  - des moyens de déchiffrement 308-1, agencés pour déchiffrer la réponse d'authentification $Res_2$ reçue de la deuxième entité au moyen de la deuxième clé secrète partagée $K_2$. Les moyens de déchiffrement 308-1 sont adaptés pour mettre en oeuvre l'étape de déchiffrement E11 du procédé d'authentification,

  - des moyens 308-2 de vérification du jeton, agencés pour vérifier que le jeton connu du dispositif d'authentification 30 est compris dans la réponse d'authentification déchiffrée par les moyens de déchiffrement 308-1. Les moyens 308-2 sont adaptés pour mettre en oeuvre l'étape E12 de vérification du jeton du procédé d'authentification décrit précédemment,

- des moyens 308-3 de vérification de signature, agencés pour vérifier que la première partie de la réponse d'authentification déchiffrée est bien conforme à une signature du challenge au moyen de l'algorithme Sign paramétré par la première clé secrète $K_1$. Les moyens 308-3 sont adaptés pour mettre en oeuvre l'étape E13 de vérification de signature du procédé d'authentification décrit précédemment.

Les moyens d'envoi 304, les moyens de calcul 305, les moyens de réception 306, les moyens de comparaison 307, les moyens d'analyse 308 qui comprennent les moyens de déchiffrement 308-1, les moyens 308-2 de vérification du jeton et les moyens 308-3 de vérification de signature sont de préférence des modules logiciels comprenant des instructions logicielles pour faire exécuter les étapes correspondantes du procédé précédemment décrit par le dispositif d'authentification 30. Les modules logiciels peuvent être stockés dans, ou transmis par un support de données. Celui-ci peut être un support matériel de stockage, par exemple un CD-ROM, une mémoire magnétique, ou bien un support de transmission tel qu'un signal ou un réseau de télécommunications.

Un exemple particulier d'un ensemble 40 de deux entités, adapté pour être authentifié par un dispositif d'authentification 30 décrit précédemment va maintenant être décrit en relation avec la figure 3.

Cet ensemble 40 comprend une première entité et une deuxième entité non représentées sur la figure 3.

L'ensemble d'entités comprend :

- une unité de traitement 401, ou CPU. On comprend que chacune des deux entités possède une unité de traitement qui lui est propre. Cet ensemble de CPU est représenté sur la figure 3 par l'unité de traitement 401. L'unité de traitement est reliée à une pluralité de mémoires :
- une mémoire vive 402, ou mémoire RAM, adaptée pour permettre d'effectuer des calculs, de charger des instructions et de les exécuter. Ici encore, on comprend que chaque entité dispose d'une mémoire RAM qui lui est propre. L'ensemble de ces mémoires RAM est représenté par la mémoire 402,
- une mémoire non volatile 403, ou mémoire ROM, adaptée pour mémoriser des données non volatiles, par exemple des algorithmes cryptographiques. On comprend que chaque entité dispose d'une telle mémoire. Cependant, l'ensemble des mémoires des entités est représenté par une seule mémoire ROM 403. La mémoire 403 mémorise des algorithmes cryptographiques, en particulier l'algorithme de signature Sign adapté pour calculer la valeur d'authentification et l'algorithme de chiffrement Enc adapté pour calculer la réponse d'authentification $Res_2$. Elle mémorise aussi un jeton token, ou un moyen permettant d'obtenir ce jeton. La mémoire 403 mémorise également dans une zone sécurisée des clés secrètes partagées avec le dispositif d'authentification. En particulier, elle mémorise une première clé secrète partagée $K_1$ et une deuxième clé secrète partagée $K_2$,

- des moyens de réception 404, agencés pour recevoir en provenance du dispositif d'authentification un message de requête d'authentification comprenant un challenge. Les moyens de réception 404 mettent en oeuvre l'étape E1 de réception d'un challenge du procédé d'authentification précédemment décrit,
- des premiers moyens de calcul 405, agencés pour que la première entité de l'ensemble calcule au moyen de la première clé secrète $K_1$ une valeur d'authentification au moyen de l'algorithme de signature Sign appliqué au challenge reçu par les moyens de réception 404. Les premiers moyens de calcul 405 sont adaptés pour mettre en oeuvre l'étape E2 de calcul d'une valeur d'authentification du procédé de l'invention,
- des moyens de transmission 406, agencés pour que la première entité transmette à la deuxième entité de l'ensemble la valeur d'authentification calculée par les moyens de calcul 405. Les moyens de transmission 406 sont adaptés pour mettre en oeuvre l'étape E3 d'envoi de la valeur d'authentification du procédé d'authentification,
- des deuxièmes moyens de calcul 407, agencés pour que la deuxième entité calcule une réponse d'authentification $Res_2$, en appliquant l'algorithme de chiffrement Enc paramétré par la deuxième clé secrète $K_2$ à la valeur d'authentification calculée par la première entité de l'ensemble. Les deuxièmes moyens de calcul 407 sont adaptés pour mettre en oeuvre l'étape E5 de calcul d'une réponse d'authentification du procédé précédemment décrit,
- des moyens d'envoi 408, agencés pour envoyer au dispositif d'authentification un message de réponse qui comprend la réponse d'authentification calculée par les deuxièmes moyens de calcul 407. Les moyens d'envoi sont adaptés pour mettre en oeuvre l'étape E6 d'envoi de la réponse d'authentification.

Les moyens de réception 404, les premiers moyens de calcul 405, les moyens de transmission 406, les deuxièmes moyens de calcul 407 et les moyens d'envoi 408 sont de préférence des modules logiciels comprenant des instructions logicielles pour faire exécuter les étapes du procédé précédemment décrit par l'ensemble constitué des deux entités. Les modules logiciels peuvent être stockés dans, ou transmis par un support de données. Celui-ci peut être un support matériel de stockage, par exemple un CD-ROM, une mémoire magnétique, ou bien un support de transmission tel qu'un signal ou un réseau de télécommunications.

L'invention concerne aussi un système d'authentification comprenant un dispositif d'authentification 30 et un ensemble 40 d'au moins deux entités.

## Revendications

1. Procédé d'authentification d'une première entité (10) et d'une deuxième entité (20) par une troisième entité (30), lesdites première et troisième entités partageant une première clé secrète ($K_1$), lesdites deuxième et troisième entités partageant une deuxième clé secrète ($K_2$), le procédé comprenant des étapes :

    - d'envoi (E0) par la troisième entité à la première entité d'un challenge (Chal),
    - de calcul (E2) par la première entité au moyen de la première clé secrète d'une valeur d'authentification ($Res_1$) fonction du challenge reçu,
    - d'envoi (E3) par la première entité à la deuxième entité de la valeur d'authentification calculée,
    - de calcul (E5) par la deuxième entité au moyen d'un algorithme de chiffrement paramétré par la deuxième clé secrète d'une réponse d'authentification ($Res_2$), fonction d'un jeton connu de la troisième entité et de la deuxième entité et de la valeur d'authentification reçue de la première entité,
    - d'envoi (E6) par la deuxième entité à la troisième entité de la réponse d'authentification,
    - de calcul (E8) par la troisième entité au moyen de la première et de la deuxième clés secrètes d'une réponse d'authentification attendue (Res), fonction du jeton et du challenge,
    - de comparaison (E9) de la réponse d'authentification reçue à la réponse d'authentification attendue calculée.

2. Procédé pour authentifier une première et une deuxième entité par une troisième entité, lesdites première et troisième entités partageant une première clé secrète ($K_1$), lesdites deuxième et troisième entités partageant une deuxième clé secrète ($K_2$), le procédé comprenant des étapes :

    - d'envoi (E0) à la première entité d'un challenge (Chal),
    - de calcul (E8) au moyen d'un algorithme de chiffrement, paramétré par la deuxième clé secrète, d'une réponse d'authentification attendue (Res), fonction d'un jeton connu de la troisième entité et de la deuxième entité, et d'une signature du challenge au moyen de la première clé secrète,

    - de réception (E7) en provenance de la deuxième entité d'une réponse d'authentification ($Res_2$) audit challenge,
    - de comparaison (E9) de la réponse d'authentification reçue à la réponse d'authentification calculée.

3. Procédé d'authentification d'un groupe constitué d'au moins deux entités (10, 20) auprès d'une troisième entité (30), la troisième entité et une première entité (10) du groupe partageant une première clé secrète ($K_1$), la troisième entité et une deuxième entité (20) du groupe partageant une deuxième clé secrète ($K_2$), ledit procédé comprenant les étapes :

    - de réception (E1) en provenance de la troisième entité d'un challenge,
    - de calcul (E2) par la première entité du groupe au moyen de la première clé secrète d'une valeur d'authentification ($Res_1$) fonction du challenge reçu,
    - d'envoi (E3) par la première entité à la deuxième entité du groupe de la valeur d'authentification calculée,
    - de calcul (E5) par la deuxième entité du groupe au moyen d'un algorithme de chiffrement paramétré par la deuxième clé secrète d'une réponse d'authentification ($Res_2$), fonction d'un jeton connu de la troisième entité et de la deuxième entité et de la valeur d'authentification reçue de la première entité,
    - d'envoi (E6) par la deuxième entité du groupe à la troisième entité de la réponse d'authentification calculée.

4. Procédé selon la revendication 1 ou la revendication 2, comprenant, si la réponse d'authentification reçue n'est pas égale à la réponse calculée, des étapes mises en oeuvre par la troisième entité :

    - un déchiffrement (E11) de la réponse d'authentification reçue au moyen de la deuxième clé secrète ($K_2$),
    - une vérification (E12) que la réponse déchiffrée comprend le jeton.

5. Procédé selon la revendication 4, comprenant, si la vérification est positive :

    - un calcul (E13) d'une valeur attendue à partir du challenge et de la première clé secrète ($K_1$), et une vérification que la réponse déchiffrée comprend la valeur attendue.

6. Procédé selon l'une des revendications précédentes, dans lequel le jeton comprend une pluralité d'octets de remplissage.

**7.** Procédé selon l'une des revendications 1 à 5, dans lequel le jeton comprend une partie du challenge.

**8.** Dispositif d'authentification (30) adapté pour authentifier une première et une deuxième entité, ledit dispositif partageant avec la première entité une première clé secrète ($K_1$), et avec la deuxième entité une deuxième clé secrète ($K_2$), ledit dispositif comprenant :

- des moyens (304) d'envoi, agencés pour envoyer un challenge (Chal) à la première entité,
- des moyens (305) de calcul, agencés pour calculer, au moyen d'un algorithme de chiffrement, paramétré par la deuxième clé secrète, une réponse d'authentification attendue (Res), fonction d'un jeton connu du dispositif d'authentification et de la deuxième entité, et d'une signature du challenge au moyen de la première clé secrète,
- des moyens (306) de réception, agencés pour recevoir en provenance de la deuxième entité une réponse ($Res_2$) audit challenge,
- des moyens (307) de comparaison, agencés pour comparer la réponse reçue à la réponse d'authentification calculée.

**9.** Ensemble de deux entités comprenant une première et une deuxième entité, ledit ensemble étant adapté pour être authentifié par un dispositif d'authentification selon la revendication 8, le dispositif d'authentification partageant avec la première entité une première clé secrète ($K_1$) et avec la deuxième entité une deuxième clé ($K_2$), ledit ensemble comprenant :

- des moyens (404) de réception, agencés pour recevoir en provenance du dispositif d'authentification un challenge,
- des premiers moyens (405) de calcul, agencés pour que la première entité du groupe calcule au moyen de la première clé secrète une valeur d'authentification ($Res_1$) fonction du challenge,
- des moyens (406) de transmission, agencés pour que la première entité transmette à la deuxième entité du groupe la valeur d'authentification,
- des deuxièmes moyens (407) de calcul, agencés pour que la deuxième entité calcule, au moyen d'un algorithme de chiffrement paramétré par la deuxième clé secrète, une réponse d'authentification ($Res_2$), fonction d'un jeton connu du dispositif d'authentification et de la deuxième entité et de la valeur d'authentification reçue de la première entité de l'ensemble,
- des moyens (408) d'envoi, agencés pour envoyer au dispositif d'authentification la réponse d'authentification calculée.

**10.** Système d'authentification comprenant :

- un dispositif d'authentification selon la revendication 8, et
- un ensemble de deux entités selon la revendication 9.

**11.** Programme d'ordinateur sur un support de données et chargeable dans la mémoire interne d'un dispositif d'authentification, le programme comprenant des portions de code pour l'exécution des étapes du procédé selon l'une quelconque des revendications 1 à 7 lorsque le programme est exécuté sur ledit dispositif.

**12.** Support de données sur lequel est enregistré le programme d'ordinateur selon la revendication 11.

**Patentansprüche**

**1.** Verfahren zur Authentifizierung einer ersten Entität (10) und einer zweiten Entität (20) durch eine dritte Entität (30), wobei die erste und die dritte Entität sich einen ersten Geheimschlüssel ($K_1$) teilen, wobei die zweite und die dritte Entität sich einen zweiten Geheimschlüssels ($K_2$) teilen, wobei das Verfahren die folgenden Schritte enthält:

- Senden (E0), durch die dritte Entität, einer Challenge (Chal) an die erste Entität,
- Berechnen (E2), durch die erste Entität, eines Authentifizierungswerts ($Res_1$) abhängig von der empfangenen Challenge mittels des ersten Geheimschlüssels,
- Senden (E3), durch die erste Entität, des berechneten Authentifizierungswerts an die zweite Entität,
- Berechnen (E5), durch die zweite Entität, einer Authentifizierungsantwort ($Res_2$) abhängig von einem der dritten Entität und der zweiten Entität bekannten Token und vom von der ersten Entität empfangenen Authentifizierungswert mittels eines durch den zweiten Geheimschlüssel parametrierten Verschlüsselungsalgorithmus,
- Senden (E6), durch die zweite Entität, der Authentifizierungsantwort an die dritte Entität,
- Berechnen (E8), durch die dritte Entität, einer erwarteten Authentifizierungsantwort (Res) abhängig vom Token und von der Challenge mittels des ersten und des zweiten Geheimschlüssels,
- Vergleich (E9) der empfangenen Authentifizierungsantwort mit der berechneten erwarteten Authentifizierungsantwort.

**2.** Verfahren zum Authentifizieren einer ersten und einer zweiten Entität durch eine dritte Entität, wobei die erste und die dritte Entität sich einen ersten Geheimschlüssel ($K_1$) teilen, wobei die zweite und die dritte Entität sich einen zweiten Geheimschlüssel ($K_2$) teilen, wobei das Verfahren die folgenden Schritte enthält:

> - Senden (E0) einer Challenge (Chal) an die erste Entität,
> - Berechnen (E8), mittels eines durch den zweiten Geheimschlüssel parametrierten Verschlüsselungsalgorithmus, einer erwarteten Authentifizierungsantwort (Res) abhängig von einem der dritten Entität und der zweiten Entität bekannten Token und von einer Signatur der Challenge mittels des ersten Geheimschlüssels,
> - Empfang (E7) einer von der zweiten Entität kommenden Authentifizierungsantwort ($Res_2$) auf die Challenge,
> - Vergleich (E9) der empfangenen Authentifizierungsantwort mit der berechneten Authentifizierungsantwort.

3. Verfahren zur Authentifizierung einer aus mindestens zwei Entitäten (10, 20) bestehenden Gruppe bei einer dritten Entität (30), wobei die dritte Entität und eine erste Entität (10) der Gruppe sich einen ersten Geheimschlüssel ($K_1$) teilen, wobei die dritte Entität und eine zweite Entität (20) der Gruppe sich einen zweiten Geheimschlüssel ($K_2$) teilen, wobei das Verfahren die folgenden Schritte enthält:

> - Empfang (E1) einer von der dritten Entität kommenden Challenge,
> - Berechnen (E2), durch die erste Entität der Gruppe, eines Authentifizierungswerts ($Res_1$) abhängig von der empfangenen Challenge mittels des ersten Geheimschlüssels,
> - Senden (E3) des berechneten Authentifizierungswerts durch die erste Entität an die zweite Entität der Gruppe,
> - Berechnen (E5), durch die zweite Entität der Gruppe, einer Authentifizierungsantwort ($Res_2$) abhängig von einem der dritten Entität und der zweiten Entität bekannten Token und vom von der ersten Entität empfangenen Authentifizierungswert mittels eines durch den zweiten Geheimschlüssel parametrierten Verschlüsselungsalgorithmus,
> - Senden (E6) der berechneten Authentifizierungsantwort durch die zweite Entität der Gruppe an die dritte Entität.

4. Verfahren nach Anspruch 1 oder Anspruch 2, das, wenn die empfangene Authentifizierungsantwort nicht gleich der berechneten Antwort ist, Schritte enthält, die von der dritten Entität durchgeführt werden:

> - eine Entschlüsselung (E11) der empfangenen Authentifizierungsantwort mittels des zweiten Geheimschlüssels ($K_2$),
> - eine Verifizierung (E12), dass die entschlüsselte Antwort das Token enthält.

5. Verfahren nach Anspruch 4, das, wenn die Verifizierung positiv ist, enthält:

> - eine Berechnung (E13) eines erwarteten Werts ausgehend von der Challenge und vom ersten Geheimschlüssel ($K_1$), und eine Verifizierung, dass die entschlüsselte Antwort den erwarteten Wert enthält.

6. Verfahren nach einem der vorhergehenden Ansprüche, wobei das Token eine Vielzahl von Füllbytes enthält.

7. Verfahren nach einem der Ansprüche 1 bis 5, wobei das Token einen Teil der Challenge enthält.

8. Authentifizierungsvorrichtung (30), die geeignet ist, um eine erste und eine zweite Entität zu authentifizieren, wobei die Vorrichtung sich mit der ersten Entität einen ersten Geheimschlüssel ($K_1$) und mit der zweiten Entität einen zweiten Geheimschlüssel ($K_2$) teilt, wobei die Vorrichtung enthält:

> - Sendeeinrichtungen (304), die eingerichtet sind, um eine Challenge (Chal) an die erste Entität zu senden,
> - Recheneinrichtungen (305), die eingerichtet sind, um mittels eines durch den zweiten Geheimschlüssel parametrierten Verschlüsselungsalgorithmus eine erwartete Authentifizierungsantwort (Res) abhängig von einem der Authentifizierungsvorrichtung und der zweiten Entität bekannten Token und von einer Signatur der Challenge mittels des ersten Geheimschlüssels zu berechnen,
> - Empfangseinrichtungen (306), die eingerichtet sind, um von der zweiten Entität kommend eine Antwort ($Res_2$) auf die Challenge zu empfangen,
> - Vergleichseinrichtungen (307), die eingerichtet sind, um die empfangene Antwort mit der berechneten Authentifizierungsantwort zu vergleichen.

9. Einheit von zwei Entitäten, die eine erste und eine zweite Entität enthält, wobei die Einheit geeignet ist, um von einer Authentifizierungsvorrichtung nach Anspruch 8 authentifiziert zu werden, wobei die Authentifizierungsvorrichtung sich mit der ersten Entität einen ersten Geheimschlüssel ($K_1$) und mit der zweiten Entität einen zweiten Schlüssel ($K_2$) teilt, wobei die Einheit enthält:

- Empfangseinrichtungen (404), die eingerichtet sind, um von der Authentifizierungsvorrichtung kommend eine Challenge zu empfangen,
- erste Recheneinrichtungen (405), die eingerichtet sind, damit die erste Entität der Gruppe einen Authentifizierungswert ($Res_1$) abhängig von der Challenge mittels des ersten Geheimschlüssels berechnet,
- Übertragungseinrichtungen (406), die eingerichtet sind, damit die erste Entität den Authentifizierungswert an die zweite Entität der Gruppe überträgt,
- zweite Recheneinrichtungen (407), die eingerichtet sind, damit die zweite Entität mittels eines durch den zweiten Geheimschlüssel parametrierten Verschlüsselungsalgorithmus eine Authentifizierungsantwort ($Res_2$) abhängig von einem der Authentifizierungsvorrichtung und der zweiten Entität bekannten Token und vom von der ersten Entität der Einheit empfangenen Authentifizierungswert berechnet,
- Sendeeinrichtungen (408), die eingerichtet sind, um die berechnete Authentifizierungsantwort an die Authentifizierungsvorrichtung zu senden.

**10.** Authentifizierungssystem, das enthält:

- eine Authentifizierungsvorrichtung nach Anspruch 8, und
- eine Einheit von zwei Entitäten nach Anspruch 9.

**11.** Computerprogramm auf einem Datenträger und in den Arbeitsspeicher einer Authentifizierungsvorrichtung ladbar, wobei das Programm Codeabschnitte zur Ausführung der Schritte des Verfahrens nach einem der Ansprüche 1 bis 7 enthält, wenn das Programm in der Vorrichtung ausgeführt wird.

**12.** Datenträger, auf dem das Computerprogramm nach Anspruch 11 gespeichert ist.


**Claims**

**1.** Method for authenticating a first entity (10) and a second entity (20) by means of a third entity (30), said first and third entities sharing a first secret key ($K_1$), said second and third entities sharing a second secret key ($K_2$), wherein the method comprises steps:

- of the third entity sending (E0) the first entity a challenge (Chal),
- of the first entity using the first secret key to calculate (E2) an authentication value ($Res_1$) on the basis of the received challenge,
- of the first entity sending (E3) the second entity the calculated authentication value,
- of the second entity using a cipher algorithm parameterized by the second secret key to calculate (E5) an authentication response ($Res_2$), on the basis of a token that is known to the third entity and to the second entity and on the basis of the authentication value received from the first entity,
- of the second entity sending (E6) the third entity the authentication response,
- of the third entity using the first and second secret keys to calculate (E8) an expected authentication response (Res), on the basis of the token and the challenge,
- of the received authentication response being compared (E9) with the calculated expected authentication response.

**2.** Method for authenticating a first and a second entity by means of a third entity, said first and third entities sharing a first secret key ($K_1$), said second and third entities sharing a second secret key ($K_2$), wherein the method comprises steps:

- of a challenge (Chal) being sent (E0) to the first entity,
- of a cipher algorithm, which is parameterized by the second secret key, being used to calculate (E8) an expected authentication response (Res), on the basis of a token that is known to the third entity and to the second entity, and a signature for the challenge using the first secret key,
- of an authentication response ($Res_2$) to said challenge being received (E7) from the second entity,
- of the received authentication response being compared (E9) with the calculated authentication response.

**3.** Method for authenticating a group made up of at least two entities (10, 20) with a third entity (30), the third entity and a first entity (10) from the group sharing a first secret key ($K_1$), the third entity and a second entity (20) from the group sharing a second secret key ($K_2$), wherein said method comprises the steps:

- of a challenge being received (E1) from the third entity,
- of the first entity from the group using the first secret key to calculate (E2) an authentication value ($Res_1$) on the basis of the received challenge,
- of the first entity sending (E3) the second entity from the group the calculated authentication value,
- of the second entity from the group using a cipher algorithm parameterized by the second secret key to calculate (E5) an authentication response ($Res_2$), on the basis of a token that is known to the third entity and to the second entity and on the basis of the authentication value received from the first entity,

- of the second entity from the group sending (E6) the third entity the calculated authentication response.

4. Method according to Claim 1 or Claim 2, comprising, if the received authentication response is not equal to the calculated response, steps implemented by the third entity:

  - deciphering (E11) of the received authentication response using the second secret key ($K_2$),
  - verification (E12) that the deciphered response comprises the token.

5. Method according to Claim 4, comprising, if the verification is positive:

  - calculation (E13) of an expected value on the basis of the challenge and the first secret key ($K_1$), and verification that the deciphered response comprises the expected value.

6. Method according to one of the preceding claims, in which the token comprises a plurality of padding bytes.

7. Method according to one of Claims 1 to 5, in which the token comprises part of the challenge.

8. Authentication device (30) suitable for authenticating a first and a second entity, said device sharing a first secret key ($K_1$) with the first entity, and a second secret key ($K_2$) with the second entity, wherein said device comprises:

  - sending means (304), designed to send a challenge (Chal) to the first entity,
  - calculation means (305), designed to calculate, using a cipher algorithm, which is parameterized by the second secret key, an expected authentication response (Res), on the basis of a token that is known to the authentication device and to the second entity, and a signature for the challenge using the first secret key,
  - reception means (306), designed to receive a response ($Res_2$) to said challenge from the second entity,
  - comparison means (307), designed to compare the received response with the calculated authentication response.

9. Set of two entities comprising a first and a second entity, said set being suitable for being authenticated by an authentication device according to Claim 8, the authentication device sharing a first secret key ($K_1$) with the first entity and a second key ($K_2$) with the second entity, wherein said set comprises:

  - reception means (404), designed to receive a challenge from the authentication device,
  - first calculation means (405) designed so that the first entity from the group uses the first secret key to calculate an authentication value ($Res_1$) on the basis of the challenge,
  - transmission means (406), designed so that the first entity transmits the authentication value to the second entity from the group,
  - second calculation means (407), designed so that the second entity uses a cipher algorithm parameterized by the second secret key to calculate an authentication response ($Res_2$), on the basis of a token that is known to the authentication device and to the second entity and on the basis of the authentication value received from the first entity in the set,
  - sending means (408), designed to send the authentication device the calculated authentication response.

10. Authentication system comprising:

  - an authentication device according to Claim 8, and
  - a set of two entities according to Claim 9.

11. Computer program on a data storage medium and able to be loaded into the internal memory of an authentication device, the program comprising code portions for executing the steps of the method according to any of Claims 1 to 7 when the program is executed on said device.

12. Data storage medium on which the computer program according to claim 11 is recorded.

Figure 1

Figure 2

Figure 3